# EUROPEAN PATENT APPLICATION

(11) **EP 4 539 530 A1**
(43) Date of publication of application: **16.04.2025**
(21) Application number: 23830044.6
(22) Date of filing: 20.06.2023
(51) Int. Cl.: H04W 24/04

(54) **MEASUREMENT METHOD AND APPARATUS**

(30) Priority: 28.06.2022 CN 202210747086
(71) Applicant: Huawei Technologies Co., Ltd., Shenzhen, Guangdong 518129 (CN)
(72) Inventor: HU, Xingxing, Shenzhen, Guangdong 518129 (CN)
(74) Representative: Körber, Martin Hans
(86) International application number: PCT/CN2023/101265
(87) International publication number: WO 2024/001864

(57) **Abstract**

This application provides a measurement method and an apparatus, which may be applied to the communication field. The measurement method includes: A terminal device receives first indication information from a first access network device, where the first indication information indicates that MDT measurement and application layer measurement are to be associated. The terminal device sends second indication information to a second access network device, where the second indication information is used to request to associate the MDT measurement and the application layer measurement. According to the method, a network side configures that the application layer measurement and MDT measurement performed by the terminal device when the terminal device is in a non-connected state are to be associated. When the terminal device is in a connected state again, the terminal device requests the second access network device to associate MDT measurement and the application layer measurement. In this way, the network side can determine that the application layer measurement and the MDT measurement performed by the terminal device when the terminal device is in a connected state also need to be associated. This helps the network side obtain a complete association relationship between a measurement result of the application layer measurement and a measurement result of the MDT measurement.

## Description

### CROSS-REFERENCE TO RELATED APPLICATIONS

This application claims priority to Chinese Patent Application No. 202210747086.9, filed with the China National Intellectual Property Administration on June 28, 2022 and entitled "MEASUREMENT METHOD AND APPARATUS", which is incorporated herein by reference in its entirety.

### TECHNICAL FIELD

This application relates to the field of communication technologies, and in particular, to a measurement method and an apparatus.

### BACKGROUND

Quality of experience (quality of experience, QoE) measurement may also be referred to as application layer measurement. Information such as service traffic, a service throughput, or a service delay may be determined through QoE measurement. For some streaming class services or voice services, for example, streaming services (streaming services) and multimedia telephony services of internet protocol multimedia systems, user experience of using these services by users may be determined based on a measurement result of the QoE measurement, to better optimize a network and improve user experience.

If user experience is poor because a problem such as a high service delay is determined based on the measurement result of the QoE measurement, a cause of the problem may be located. However, the QoE measurement is performed at a service layer, and it is difficult to locate the problem by using the measurement result of the QoE measurement. In this case, when the measurement result of the QoE measurement is poor, how to accurately locate the cause of the problem of the measurement result is an urgent problem to be resolved.

### SUMMARY

This application provides a measurement method and an apparatus, to improve accuracy of locating a cause of a problem in a measurement result.

According to a first aspect, this application provides a measurement method. The method includes: A terminal device receives first indication information from a first access network device, where the first indication information indicates that minimization of drive-tests measurement and application layer measurement are to be associated. The terminal device sends second indication information to a second access network device, where the second indication information is used to request to associate the minimization of drive-tests measurement and the application layer measurement.

According to the method, the first access network device configures that the application layer measurement and minimization of drive-tests (minimization of drive-tests, MDT) measurement performed by the terminal device when the terminal device is in a non-connected state are to be associated. When the terminal device is in a connected state again, the terminal device requests the second access network device to associate MDT measurement and the application layer measurement. In this way, a network side can determine that the application layer measurement and the MDT measurement performed by the terminal device when the terminal device is in a connected state also need to be associated. This helps the network side obtain a complete association relationship between a measurement result of the application layer measurement and a measurement result of the MDT measurement. Therefore, when a problem occurs in the the measurement result of the application layer measurement, the network side may determine, based on the measurement result of the MDT measurement, whether the problem that occurs in the application layer measurement result is caused by signal quality on a radio side, so that the measurement result of the MDT measurement can be used for locating a problem at an application layer, to improve accuracy of problem locating.

In a possible implementation, the first indication information indicates that the application layer measurement and the minimization of drive-tests measurement performed by the terminal device when the terminal device is in a non-connected state are to be associated; and the second indication information is used to request to associate the application layer measurement and the minimization of drive-tests measurement performed by the terminal device when the terminal device is in a non-connected state.

In a possible implementation, the method further includes: The terminal device receives third indication information from the first access network device, where the third indication information indicates that the minimization of drive-tests measurement performed by the terminal device when the terminal device is in a non-connected state is signaling-based logged minimization of drive-tests measurement or management-based logged minimization of drive-tests measurement.

In a possible implementation, the method further includes: The terminal device sends fourth indication information to the second access network device, where the fourth indication information indicates that the minimization of drive-tests measurement performed by the terminal device when the terminal device is in a non-connected state is the signaling-based minimization of drive-tests measurement or the management-based minimization of drive-tests measurement; or the fourth indication information indicates that the terminal device has configuration information of the signaling-based logged minimization of drive-tests measurement or has configuration information of the management-based logged minimization of drive-tests measurement.

According to the method, the terminal device indicates, by using the fourth indication information, the signaling-based minimization of drive-tests measurement or the management-based minimization of drive-tests measurement. If the fourth indication information indicates that the minimization of drive-tests measurement performed by the terminal device when the terminal device is in a non-connected state is the management-based minimization of drive-tests measurement, the second access network device no longer requests the network side to configure the minimization of drive-tests measurement performed by the terminal device when the terminal device is in a connected state, to improve system efficiency.

In a possible implementation, before the terminal device sends the second indication information to the second access network device, the terminal device receives configuration information of the application layer measurement from the first access network device. The method further includes: The terminal device sends fifth indication information to the second access network device, where the fifth indication information indicates that the terminal device has the configuration information of the application layer measurement.

According to the method, the second access network device may determine that the terminal device has the configuration information of the application layer measurement, so that the second access network device does not repeatedly configure the configuration information of the application layer measurement for the terminal device, to improve the system efficiency.

In a possible implementation, the method further includes: The terminal device performs the minimization of drive-tests measurement based on first configuration information, where the first configuration information is configured by the second access network device, and the first configuration information is used by the terminal device to perform minimization of drive-tests measurement when the terminal device is in a connected state. The terminal device sends a measurement result of the minimization of drive-tests measurement to the second access network device.

In a possible implementation, the method further includes: The terminal device performs the application layer measurement based on second configuration information, where the second configuration information is configured by the first access network device before the terminal device accesses the second access network device, and the second configuration information is used by the terminal device to perform the application layer measurement. The terminal device sends a measurement result of the application layer measurement to the second access network device.

According to a second aspect, this application provides a measurement method. The method includes: A second access network device receives second indication information from a terminal device, where the second indication information is used to request to associate minimization of drive-tests measurement and application layer measurement. The second access network device sends first configuration information to the terminal device based on the second indication information, where the first configuration information is used by the terminal device to perform minimization of drive-tests measurement when the terminal device is in a connected state.

In a possible implementation, the method further includes: The second access network device receives fourth indication information from the terminal device, where the fourth indication information indicates that minimization of drive-tests measurement performed by the terminal device when the terminal device is in a non-connected state is signaling-based minimization of drive-tests measurement or management-based minimization of drive-tests measurement; or the fourth indication information indicates that the terminal device has configuration information of signaling-based logged minimization of drive-tests measurement or has configuration information of management-based logged minimization of drive-tests measurement.

In a possible implementation, the method further includes: The second access network device receives fifth indication information from the terminal device, where the fifth indication information indicates that the terminal device has configuration information of the application layer measurement.

In a possible implementation, if the second access network device determines, based on the fourth indication information, that the minimization of drive-tests measurement performed by the terminal device when the terminal device is in a non-connected state is the signaling-based logged minimization of drive-tests measurement, the method further includes:

The second access network device sends sixth indication information to a core network device, where the sixth indication information is used to request to configure, for the terminal device, configuration information of the minimization of drive-tests measurement performed by the terminal device when the terminal device is in a connected state, or indicates the terminal device to perform the application layer measurement on a broadcast service. The second access network device receives the first configuration information from the core network device.

In a possible implementation, the method further includes: The second access network device receives a measurement result of the minimization of drive-tests measurement and a measurement result of the application layer measurement from the terminal device.

In a possible implementation, the method further includes: The second access network device sends the measurement result of the application layer measurement to a measurement collection entity, and sends the measurement result of the minimization of drive-tests measurement to a trace collection entity.

According to a third aspect, this application provides a measurement method. The method includes: A terminal device receives first information and second information from a first access network device, where the first information includes configuration information of minimization of drive-tests measurement performed by the terminal device when the terminal device is in a non-connected state, and the second information includes configuration information of application layer measurement performed by the terminal device. The terminal device switches from the non-connected state to a connected state; and the terminal device performs radio side measurement based on the first information, and performs the application layer measurement based on the second information.

According to the method, if a network side configures that the application layer measurement and the MDT measurement performed by the terminal device when the terminal device is in a non-connected state are to be associated, when the terminal device is in a connected state again, the terminal device may continue to perform measurement based on the configuration information of the MDT measurement, and report a measurement result. In this way, the network side can continue to associate the application layer measurement and the measurement performed by the terminal device when the terminal device is in a connected state, so that the network side obtains a complete association relationship between the measurement result of the application layer measurement and a measurement result of the radio side measurement. In addition, the terminal device may reuse the configuration information of the MDT measurement performed by the terminal device when the terminal device is in a non-connected state, thereby reducing signaling overheads.

In a possible implementation, the method further includes: The terminal device receives first indication information from the first access network device, where the first indication information indicates that the minimization of drive-tests measurement and the application layer measurement are to be associated.

In a possible implementation, that the terminal device switches to a connected state includes: The terminal device switches to the connected state by establishing a connection to a second access network device.

In a possible implementation, the method further includes: The terminal device sends a first measurement result and a second measurement result to the second access network device, where the first measurement result is obtained through measurement based on the first information when the terminal device is in a non-connected state, and the second measurement result is obtained by performing measurement by the terminal device based on the first information when the terminal device is in a non-connected state based on the second information.

In a possible implementation, the method further includes: The terminal device sends a third measurement result and a fourth measurement result to the second access network device, where the third measurement result is obtained by performing measurement by the terminal device based on the first information when the terminal device is in a connected state, and the fourth measurement result is obtained by performing measurement by the terminal device based on the second information when the terminal device is in a connected state.

According to a fourth aspect, an embodiment of this application provides a communication apparatus. The communication apparatus may be a terminal device, a module that can implement a function on a terminal device side, or a chip that can be disposed inside the terminal device. The communication apparatus has a function for implementing the method according to the first aspect or the third aspect. For example, the communication apparatus includes a corresponding module, unit, or means for performing some or all operations in the first aspect or the third aspect. The module, unit, or means may be implemented by software or hardware, or may be implemented by hardware by executing corresponding software.

In a possible design, the communication apparatus includes a processing unit and a communication unit. The communication unit may be configured to send and receive a signal, to implement communication between the communication apparatus and another apparatus. The processing unit may be configured to perform some internal operations of the communication apparatus. Functions performed by the processing unit and the communication unit may correspond to the operations in the first aspect or the third aspect.

In a possible design, the communication apparatus includes a processor, and may further include a transceiver. The transceiver is configured to send and receive a signal, and the processor completes the method according to any one of the possible designs or implementations of the first aspect or the third aspect by using the transceiver. The communication apparatus may further include one or more memories. The memory may be configured to be coupled to the processor, and the memory may store a computer program or instructions for implementing the function in the first aspect or the third aspect. The processor may execute the computer program or the instructions stored in the memory. When the computer program or the instructions are executed, the communication apparatus is enabled to implement the method according to any one of the possible designs or implementations in the first aspect or the third aspect.

In a possible design, the communication apparatus includes a processor, and the processor may be coupled to a memory. The memory may store a computer program or instructions for implementing the function in the first aspect or the third aspect. The processor may execute the computer program or the instructions stored in the memory. When the computer program or the instructions are executed, the communication apparatus is enabled to implement the method according to any one of the possible designs or implementations in the first aspect or the third aspect.

In a possible design, the communication apparatus includes a processor and an interface circuit. The processor is configured to communicate with another apparatus via the interface circuit and perform the method according to any one of the possible designs or implementations in the first aspect or the third aspect.

It may be understood that, the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in a memory. In addition, there may be one or more processors, and one or more memories. The memory may be integrated with the processor, or the memory and the processor are disposed separately.

According to a fifth aspect, an embodiment of this application provides a communication apparatus. The communication apparatus may be an access network device, a module that can implement a function on an access network device side, or a chip that can be disposed inside the access network device. The communication apparatus has a function for implementing the method according to the second aspect. For example, the communication apparatus includes a corresponding module, unit, or means (means) for performing some or all steps in the second aspect. The function, unit, or means may be implemented by software or hardware, or may be implemented by hardware by executing corresponding software.

In a possible design, the communication apparatus includes a processing unit and a communication unit. The communication unit may be configured to send and receive a signal, to implement communication between the communication apparatus and another apparatus. The processing unit may be configured to perform some internal operations of the communication apparatus. Functions performed by the processing unit and the communication unit may correspond to the operations in the second aspect.

In a possible design, the communication apparatus includes a processor, and may further include a transceiver. The transceiver is configured to send and receive a signal, and the processor completes the method according to any one of the possible designs or implementations of the second aspect by using the transceiver. The communication apparatus may further include one or more memories. The memory may be coupled to the processor, and the memory may store computer program or instructions for implementing the function in the second aspect. The processor may execute the computer program or the instructions stored in the memory. When the computer program or the instructions are executed, the communication apparatus is enabled to implement the method in any one of the possible designs or implementations of the second aspect.

In a possible design, the communication apparatus includes a processor, and the processor may be coupled to a memory. The memory may store computer program or instructions for implementing the function in the second aspect. The processor may execute the computer program or the instructions stored in the memory. When the computer program or the instructions are executed, the communication apparatus is enabled to implement the method in any one of the possible designs or implementations of the second aspect.

In a possible design, the communication apparatus includes a processor and an interface circuit. The processor is configured to: communicate with another apparatus via the interface circuit, and perform the method according to any one of the possible designs or implementations of the second aspect.

According to a sixth aspect, an embodiment of this application provides a communication system. The communication system includes the communication apparatus according to the fourth aspect and the communication apparatus according to the fifth aspect.

According to a seventh aspect, an embodiment of this application provides a computer-readable storage medium. The computer storage medium stores computer-readable instructions, and when a computer reads and executes the computer-readable instructions, the computer is enabled to implement the method according to any one of the possible designs of the first aspect to the third aspect.

According to an eighth aspect, an embodiment of this application provides a computer program product. When a computer reads and executes the computer program product, the computer is enabled to implement the method according to any one of the possible designs of the first aspect to the third aspect.

According to a ninth aspect, an embodiment of this application provides a chip. The chip includes a processor. The processor is coupled to a memory, and is configured to read and execute a software program stored in the memory, to implement the method according to any one of the possible designs of the first aspect to the third aspect.

According to a tenth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the first aspect or the third aspect by using a logic circuit or by executing a computer program or instructions.

According to an eleventh aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the second aspect and any one of the possible implementations of the second aspect by using a logic circuit or by executing a computer program or instructions.

According to a twelfth aspect, a communication apparatus is provided, including a processor and a memory. The processor is coupled to the memory, and the processor is configured to execute a computer program or instructions stored in the memory, to enable the communication apparatus to implement the method according to any one of the possible implementations of the first aspect or the third aspect.

According to a thirteenth aspect, a communication apparatus is provided, and includes a processor and a memory. The processor is coupled to the memory, and the processor is configured to execute a computer program or instructions stored in the memory, to enable the communication apparatus to implement the method according to the second aspect and any one of the possible implementations of the second aspect.

According to a fourteenth aspect, a chip is provided. The chip includes a processor, and may further include a memory. The processor is configured to execute a computer program or instructions stored in the memory, to enable a chip system to implement the method according to any one of the possible implementations of the first aspect or the third aspect.

According to a fifteenth aspect, a chip is provided. The chip includes a processor, and may further include a memory. The processor is configured to execute a computer program or instructions stored in the memory, to enable a chip system to implement the method according to the second aspect and any one of the possible implementations of the second aspect.

These aspects or another aspect of this application is clearer and more comprehensible in descriptions of the following embodiments.

### BRIEF DESCRIPTION OF DRAWINGS

FIG. 1 is a diagram of an architecture of a communication system applicable to an embodiment of this application;
FIG. 2A and FIG. 2B are a schematic flowchart of a measurement method according to an embodiment of this application;
FIG. 3 is a schematic flowchart of a measurement method according to an embodiment of this application;
FIG. 4 is a schematic flowchart of a measurement method according to an embodiment of this application;
FIG. 5 is a schematic flowchart of a measurement method according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

The following describes in detail embodiments of this application with reference to the accompanying drawings of the specification.

A communication method provided in embodiments of this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or applied to various future communication systems, for example, a 6th generation (6th generation, 6G) communication system.

A method and an apparatus provided in embodiments of this application are based on a same or similar technical concept. Because problem solving principles of the method and the apparatus are similar, implementations of the apparatus and the method may be mutually referenced. Repeated descriptions are not described.

An access network device in embodiments of this application may be a device in a wireless network. For example, the access network device may be a device that is deployed in a radio access network and that provides a wireless communication function for a terminal device. For example, the access network device may be a radio access network (radio access network, RAN) node that connects the terminal device to the wireless network.

In this application, the access network device includes but is not limited to: a next generation NodeB (next generation NodeB, gNB), an evolved NodeB (evolved NodeB, eNB), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like.

The access network device in this application may include a central unit (central unit, CU) and/or a distributed unit (distributed unit, DU). The CU may complete functions of a radio resource control protocol and a packet data convergence protocol (packet data convergence protocol, PDCP) of the base station, and may further complete functions of a service data adaptation protocol (service data adaptation protocol, SDAP). The DU may complete functions of a radio link control layer and a medium access control (medium access control, MAC) layer of the base station, and may further complete some or all of functions of a physical layer. For specific descriptions of the foregoing protocol layers, refer to technical specifications related to the 3rd generation partnership project (3rd Generation Partnership Project, 3GPP). The CU and the DU may jointly complete the functions of the base station. In addition, a function of the CU may be implemented by a plurality of entities. For example, the function of the CU may be further divided. For example, functions of a control plane (control plane, CP) and a user plane (user plane, UP) of the CU are separated, to form a CU control plane (CU-CP) and a CU user plane (CU-UP). For example, the CU-CP and the CU-UP may be implemented by different functional entities, and are connected through an E1 interface. The CU-CP and the CU-UP may be coupled to the DU.

The terminal device in embodiments of this application may be a device that provides a user with voice and/or data connectivity, a handheld device having a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (provides the user with voice/data connectivity), for example, a handheld device or an in-vehicle device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in the internet of vehicles, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. For example, the wireless terminal in the internet of vehicles may be an in-vehicle device, an entire vehicle device, an in-vehicle module, a vehicle, or the like. The wireless terminal in industrial control may be a camera, a robot, or the like. The wireless terminal in smart home may be a television, an air conditioner, a sweeper, a speaker, a set-top box, or the like.

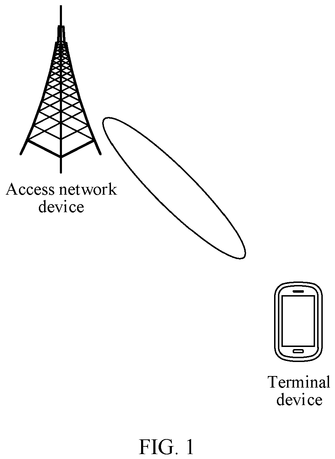

For ease of understanding of embodiments of this application, a communication system shown in FIG. 1 is first used as an example to describe in detail a communication system applicable to embodiments of this application. FIG. 1 is a diagram of an architecture of a communication system applicable to an embodiment of this application. The communication system may include at least one access network device and at least one terminal device. It should be understood that FIG. 1 is merely a simplified diagram used as an example for ease of understanding. The communication system may further include another access network device or another terminal device, which is not shown in FIG. 1.

To detect and optimize a problem and a fault in a wireless network, a network side may indicate the terminal device to perform MDT measurement and application layer measurement. The MDT measurement means that an operator performs measurement through a terminal device of a subscriber and sends a measurement result to partially replace conventional drive-tests work, to automatically collect measurement data, so as to detect and optimize the problem and the fault in the wireless network. The MDT measurement may also be referred to as radio side measurement, and includes logged MDT (logged MDT) measurement and immediate MDT (immediate MDT) measurement. The logged MDT measurement is MDT measurement performed by the terminal device when the terminal device is in a radio resource control (radio resource control, RRC) idle (idle) state or an RRC inactive (inactive) state. The logged MDT measurement is used to measure strength of a received signal. In this application, the logged MDT measurement may be referred to as MDT measurement performed by the terminal device when the terminal device is in an RRC non-connected state. Currently, if the network side configures the terminal device to perform the MDT measurement when the terminal device is in an idle state or an inactive state, when the terminal device enters a connected state, the terminal device no longer continues to perform MDT measurement based on configuration of the MDT measurement performed by the terminal device when the terminal device is in an idle state or an inactive state. If the network side further expects to obtain a result of the MDT measurement, the network side may configure measurement information of the MDT measurement performed by the terminal device when the terminal device is in a connected state.

The immediate MDT measurement is MDT measurement performed by the terminal device when the terminal device is in an RRC connected state. The immediate MDT measurement is used to measure at least one of an amount of data, a throughput rate, a packet transmission delay, a packet loss rate, or a processing delay of the terminal device. In this application, the immediate MDT measurement may be referred to as the MDT measurement performed by the terminal device when the terminal device is in an RRC connected state. In this application, the RRC idle state or the RRC inactive state is briefly referred to as a non-connected state, and the RRC connected state is briefly referred to as a connected state.

The MDT measurement may be further divided into signaling-based MDT (signaling-based MDT) measurement and management-based MDT (management-based MDT) measurement. The signaling-based MDT measurement is MDT measurement for a specific terminal device. In this case, the access network device receives, from a core network (core network, CN), signaling for performing the MDT measurement for the specific terminal device. The management-based MDT measurement is not MDT measurement for a specific terminal device. The access network device receives signaling for performing MDT measurement from an operation, administration and maintenance (operation, administration and maintenance, OAM) entity or an element management (element management, EM) entity. The signaling is not for a specific terminal device, but for all terminal devices in a cell of the access network device.

In addition, the MDT measurement may be performed by the access network device, or may be performed by the terminal device. Specifically, based on a measurement type, the MDT measurement may be divided into signal level measurement, quality of service (quality of service, QoS) measurement, accessibility measurement, and the like.

Signal level measurement: The terminal device measures a signal level of a radio signal, and sends a measurement result to the access network device or an access network device controller.

QoS measurement: The QoS measurement may have a plurality of parameters, and includes but is not limited to measurement on traffic of a service, a throughput of a service, a service delay, an uplink processing delay of the terminal device, an air interface delay, or the like. If the parameter of the measurement is at least one of the traffic of the service, the throughput of the service, or the service delay, the access network device may perform the QoS measurement. If the uplink processing delay of the terminal device is measured, the terminal device may perform the QoS measurement. If the air interface delay is measured, the access network device and the terminal device may jointly perform the QoS measurement.

Accessibility measurement: The terminal device records radio resource control (radio resource control, RRC) connection establishment failure information, and sends the information to the access network device or an access network device controller.

The application layer measurement, namely, QoE measurement, may also be divided into signaling-based application layer measurement and management-based application layer measurement. The signaling-based application layer measurement means that the application layer measurement is for a specific terminal device. For example, the core network sends configuration information of the signaling-based application layer measurement to the access network device via terminal device-level signaling. The management-based application layer measurement means that the application layer measurement is not for a specific terminal device. For example, the element management entity or the OAM entity sends configuration information of the management-based application layer measurement to the access network device, and the access network device selects, based on a capability of a terminal device currently accessing the access network device and other information, some terminal devices to perform the application layer measurement.

When being in an idle state or an inactive state, the terminal device may receive a broadcast service in a multicast broadcast service (multicast broadcast service, MBS), and perform the application layer measurement on the received broadcast service. The configuration information of the application layer measurement is configured by the network side for the terminal device before the terminal device enters an idle state or an inactive state. After entering a connected state, the terminal device sends a measurement result of the application layer measurement to the network side.

This application provides a measurement method, to associate MDT measurement and application layer measurement, so that a network side can associate an application layer measurement result and an measurement result of the MDT measurement. When a problem occurs in the application layer measurement result, for example, a service delay is high, the network side may determine, based on the measurement result of the MDT measurement, whether the problem that occurs in the application layer measurement result is caused by signal quality on a radio side or an access network side, so that the measurement result of the MDT measurement can be used for locating a problem at an application layer, thereby improving accuracy of problem locating.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In a first implementation of this application, when a terminal device is in a connected state, a first access network device may configure, for the terminal device, configuration information of application layer measurement and configuration information of MDT measurement performed by the terminal device when the terminal device is in a non-connected state, and indicate, to the terminal device by using first indication information, that the MDT measurement and the application layer measurement are to be associated. When being in a non-connected state, the terminal device may perform the MDT measurement based on the configuration information of the MDT measurement, and perform the application layer measurement based on the configuration information of the application layer measurement. When the terminal device is in a connected state again, if the terminal device accesses a second access network device, the terminal device sends second indication information to the second access network device, where the second indication information is used to request to associate the MDT measurement and the application layer measurement. In this way, a network side may determine to associate the application layer measurement and the MDT measurement, to configure, for the terminal device, configuration information of MDT measurement performed by the terminal device when the terminal device is in a connected state. The following describes the foregoing process by using a specific procedure.

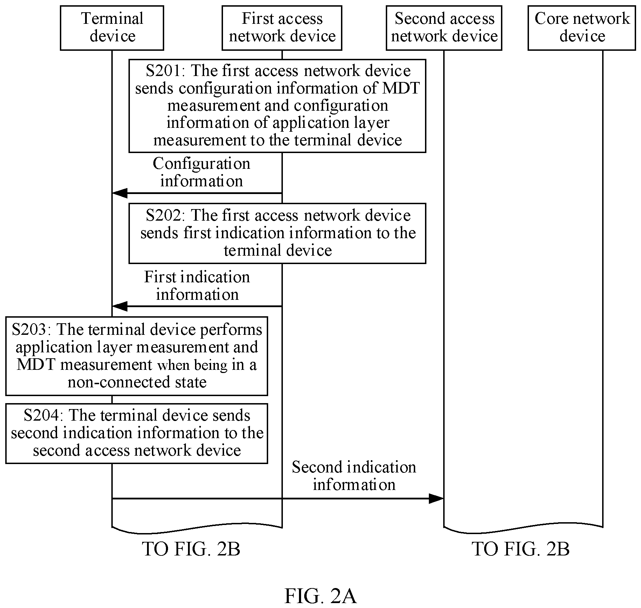

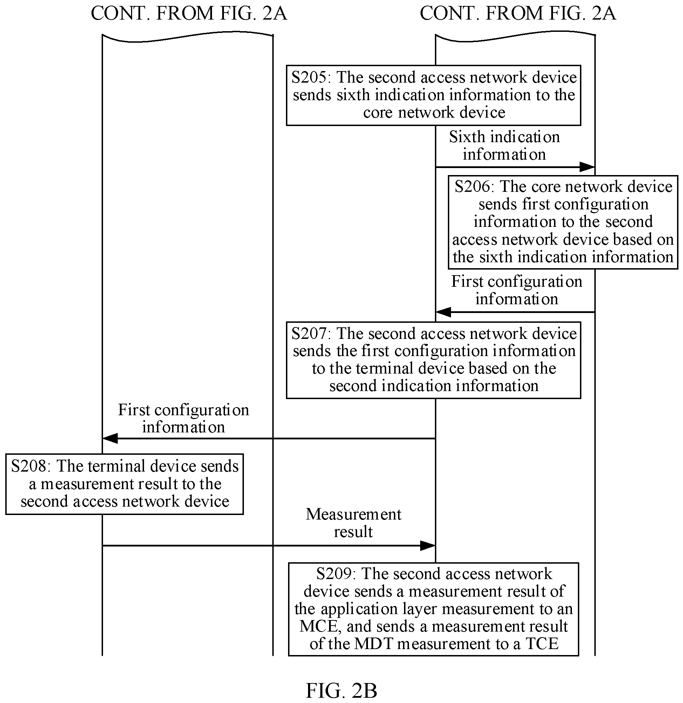

FIG. 2A and FIG. 2B are a schematic flowchart of a measurement method according to an embodiment of this application. The method includes the following steps.

S201: A first access network device sends configuration information of MDT measurement and configuration information of application layer measurement to a terminal device.

The configuration information of the MDT measurement includes configuration information of MDT measurement performed by the terminal device when the terminal device is in a non-connected state, that is, the configuration information of the MDT measurement includes configuration information of logged MDT measurement. The configuration information of the application layer measurement includes configuration information of application layer measurement performed by the terminal device on a broadcast service in an MBS. In this application, unless otherwise specified, the application layer measurement is the application layer measurement performed on the broadcast service in the MBS.

For ease of description, in this application, the configuration information of the MDT measurement that is configured by the first access network device for the terminal device is referred to as third configuration information, and the configuration information of the application layer measurement that is configured by the first access network device for the terminal device is referred to as second configuration information.

The second configuration information and the third configuration information may be sent by using one message, or may be separately sent by using a plurality of messages. This is not limited in this application. For example, the first access network device may send the third configuration information by using one RRC message, and send the second configuration information by using another RRC message.

Content included in the second configuration information and content included in the third configuration information are not limited in this application. For example, the third configuration information may include at least one of the following: a trace identifier; an MDT measurement indicator; a trace collection entity (trace collection entity, TCE) identifier; absolute time information; and a recording interval and duration of the MDT measurement. The trace identifier includes a trace reference (trace reference) and a trace recording session reference (trace recording session reference). The trace collection entity is an entity that needs to receive a measurement result of the MDT measurement. The MDT measurement indicator includes but is not limited to a signal level of a radio signal, traffic of a service, a throughput of a service, or the like.

The second configuration information may include at least one of the following: an application layer measurement configuration; a service type corresponding to the application layer measurement configuration; an application layer measurement identifier corresponding to the application layer measurement configuration; a QoE reference (reference) corresponding to the application layer measurement configuration; and an identifier that is of a broadcast service in the MBS and that corresponds to the application layer measurement configuration.

The application layer measurement identifier is generated by the first access network device, and corresponds to one application layer measurement configuration.

The QoE reference may also be referred to as a QoE measurement identifier, and identifies the application layer measurement (namely, QoE measurement). The QoE reference includes a public land mobile network (public land mobile network, PLMN) and a QoE measurement collection identifier, where the QoE measurement collection identifier is allocated by a management system or an operator.

The application layer measurement configuration includes information such as a measurement or reporting periodicity, measurement start time, measurement end time, or a to-be-measured application layer indicator. The application layer indicator may include but is not limited to an indicator such as an average throughput, an initial play delay, deterioration duration, jitter duration, a round-trip delay, or an average bit rate. The second configuration information may include an identifier of one or more broadcast services in the MBS. The identifier of the broadcast service in the MBS may be an MBS session identity (session identity) of the broadcast service, and specific broadcast services on which the application layer measurement is to be performed may be determined by using the MBS session identity. The MBS session identity includes a temporary mobile group identity (temporary mobile group identity, TMGI), and uniquely identifies an MBS service. Optionally, the MBS session identity further includes a network identifier (network identifier, NID).

In an implementation, the first access network device may obtain, from a core network device or an OAM, related information corresponding to the third configuration information and related information corresponding to the second configuration information. The related information corresponding to the third configuration information includes a part of information in the third configuration information, and may further include other information. For example, the related information corresponding to the third configuration information includes one or more of the trace identifier, the MDT measurement indicator, and the recording interval and duration of the MDT measurement in the third configuration information. The related information corresponding to the third configuration information further includes TCE address information. The first access network device obtains the TCE identifier based on a mapping relationship between the TCE address information and the TCE identifier, where the mapping relationship may be obtained by the first access network device from the OAM. The third configuration information sent by the first access network device to the terminal device includes the TCE identifier, but does not include the TCE address information. The related information corresponding to the second configuration information includes a part of information in the second configuration information, and may further include other information. For example, the related information corresponding to the second configuration information includes the application layer measurement configuration and the service type corresponding to the application layer measurement configuration in the second configuration information. The related information corresponding to the second configuration information further includes the QoE reference. The first access network device allocates one application layer measurement identifier for the second configuration information. The application layer measurement identifier identifies the application layer measurement, and may correspond to the QoE reference.

In an implementation, when obtaining the second configuration information from the core network device or the OAM, the first access network device may further obtain measurement association indication information from the core network device or the OAM. The measurement association indication information indicates the configuration information of the MDT measurement that is associated with the second configuration information, or indicates that the MDT measurement and the application layer measurement need to be associated. When the measurement association indication information indicates the configuration information of the MDT measurement that is associated with the second configuration information, the measurement association indication information may indicate a measurement identifier of the MDT measurement that is associated with the second configuration information. For example, the measurement identifier is a trace identifier and/or a trace reference of the MDT measurement.

In an implementation, the first access network device may further send a broadcast service notification message to a measurement collection entity (measurement collection entity, MCE), where the broadcast service notification message is used to notify whether a single frequency network (single frequency network, SFN) transmission mode is used for a broadcast service in the MBS in a cell of the first access network device. SFN transmission is a technology in which a plurality of cells transmit a same waveform at a same moment, that is, all cells simultaneously transmit same content on a same radio resource. Therefore, from a perspective of reception by the terminal device, broadcast services of different cells that are received by the terminal device are from a same cell. In this way, the MCE learns of a relationship between a measurement result of the application layer measurement and a radio configuration on a radio side, so that whether the SFN transmission is used for the broadcast service on the radio side further needs to be considered in addition to the measurement result of the MDT measurement when the measurement result of the application layer measurement is analyzed.

S202: The first access network device sends first indication information to the terminal device. Correspondingly, the terminal device receives the first indication information from the first access network device.

The first indication information indicates that the MDT measurement and the application layer measurement are to be associated. Optionally, the first indication information indicates that the application layer measurement and the MDT measurement performed by the terminal device when the terminal device is in a non-connected state are to be associated. The first indication information is used to notify the terminal device that the application layer measurement and the MDT measurement performed by the terminal device when the terminal device is in a non-connected state are to be associated. A specific device that performs the association is not limited. For another example, that the first indication information indicates that the MDT measurement and the application layer measurement are to be associated may alternatively be replaced with that the first indication information indicates that the terminal device needs to send second indication information to the access network device after the terminal device subsequently enters a connected state. For details of the second indication information, refer to S204. For another example, that the first indication information indicates that the MDT measurement and the application layer measurement are to be associated may alternatively be replaced with that the first indication information indicates that the application layer measurement needs to be associated with the MDT measurement. In other words, before the application layer measurement ends, the application layer measurement always needs to be associated with the MDT measurement.

The first indication information may be carried by using the third configuration information, or may be carried by using the second configuration information, or may be carried by using one piece of information independent of the third configuration information or the second configuration information. If the first indication information is carried by using the third configuration information, the third configuration information may further include the application layer measurement identifier of the application layer measurement to be associated with the MDT measurement. If the first indication information is carried by using the second configuration information, the second configuration information may further include the trace identifier of the MDT measurement to be associated with the application layer measurement.

In this application, the first access network device may further indicate whether the application layer measurement is to be associated with signaling-based logged MDT measurement or management-based logged MDT measurement. For example, the first access network device sends third indication information to the terminal device, where the third indication information may be in the third configuration information, or may be in information independent of the third configuration information. In an implementation, the third indication information indicates that the MDT measurement performed by the terminal device when the terminal device is in a non-connected state is the signaling-based logged MDT measurement or the management-based logged MDT measurement, or the third indication information indicates that the third configuration information is used to perform the signaling-based logged MDT measurement or indicates that the third configuration information is used to perform the management-based logged MDT measurement. In this implementation, the terminal device may determine, based on the first indication information and the third indication information, whether the application layer measurement is to be associated with the signaling-based logged MDT measurement or the management-based logged MDT measurement. In another implementation, the third indication information directly indicates whether the application layer measurement is to be associated with the signaling-based logged MDT measurement or the management-based logged MDT measurement.

In this application, a sequence of performing S201 and S202 is not limited. The first access network device may simultaneously perform S201 and S202. For example, the first access network device sends the configuration information of the MDT measurement, the configuration information of the application layer measurement, and the first indication information in a same RRC message. Alternatively, the first access network device may perform S201 before S202.

S203: The terminal device performs the application layer measurement and the MDT measurement when being in a non-connected state.

The terminal device performs the MDT measurement based on the third configuration information, and performs the application layer measurement based on the second configuration information. A specific measurement process is not limited in this application, and details are not described herein.

In this application, the terminal device may further switch from the non-connected state to the connected state. For example, the terminal device needs to initiate a service or receive a paging message from a network side, to switch to the connected state. When the terminal device switches from the non-connected state to the connected state, the terminal device may request the network side to associate the MDT measurement and the application layer measurement. Descriptions are provided below by using an example in which the terminal device switches to the connected state by establishing a connection to a second access network device. The second access network device and the first access network device may be a same device, or may be different devices. This is not limited in this application.

S204: The terminal device sends the second indication information to the second access network device. Correspondingly, the second access network device receives the second indication information from the terminal device.

In this application, the second indication information may be generated by an access stratum (access stratum, AS) of the terminal device. Alternatively, the second indication information may be generated by an upper layer (for example, an application layer) of the access stratum of the terminal device.

In a possible implementation, the second indication information is used to request to associate the MDT measurement and the application layer measurement. Specifically, the second indication information is used to request the association between the application layer measurement and the MDT measurement performed by the terminal device when the terminal device is in a non-connected state. In another implementation, the second indication information is used to request to configure the association between the MDT measurement and the application layer measurement. In another implementation, the second indication information indicates that the terminal device receives the first indication information before accessing the second access network device.

In a possible implementation, the terminal device sends the second indication information when the terminal device receives the first indication information. The terminal device does not send the second indication information if the terminal device does not receive the first indication information.

In a possible implementation, after the terminal device switches to the connected state, the terminal device sends the second indication information when the AS of the terminal device has received start indication information of the application layer measurement from the upper layer of the AS (that is, the terminal device has started to perform the application layer measurement).

In another possible implementation, the terminal device sends the second indication information when a serving cell accessed by the terminal device broadcasts a broadcast service corresponding to the application layer measurement or when the terminal device is performing the application layer measurement.

In this application, the terminal device may further indicate, to the second access network device, a type of the MDT measurement associated with the application layer measurement, that is, indicate whether to associate the application layer measurement with the signaling-based logged MDT measurement or the management-based logged MDT measurement.

For example, the terminal device sends fourth indication information to the second access network device. In a possible implementation, the fourth indication information indicates that the MDT measurement performed by the terminal device when the terminal device is in a non-connected state is the signaling-based MDT measurement or the management-based MDT measurement. In this way, the second access network device can directly determine, based on the second indication information and the fourth indication information, whether the terminal device requests to associate the application layer measurement with the signaling-based logged MDT measurement or the management-based logged MDT measurement. In another possible implementation, the fourth indication information indicates that the terminal device has configuration information of the signaling-based logged MDT measurement or configuration information of the management-based logged MDT measurement. In this way, the second access network device can determine, based on the second indication information and the fourth indication information, whether the terminal device requests to associate the application layer measurement with the signaling-based logged MDT measurement or the management-based logged MDT measurement.

In a possible implementation, the terminal device sends the fourth indication information when the terminal device starts to perform the application layer measurement. In another possible implementation, the terminal device sends the fourth indication information when the serving cell accessed by the terminal device broadcasts the broadcast service corresponding to the application layer measurement. In another possible implementation, the terminal device sends the fourth indication information when the terminal device is performing the application layer measurement.

In a possible implementation, to enable the MCE to learn that the terminal device switches from the non-connected state to the connected state, the terminal device sends service measurement indication information to the second access network device, where the service measurement indication information indicates a specific broadcast service corresponding to the application layer measurement has been started. After receiving the service measurement indication information, the second access network device sends state switching information to the MCE, where the state switching information indicates the terminal device to switch from the non-connected state to the connected state in a process of receiving a broadcast service. Further, the state switching information further indicates whether a frequency domain resource in a radio resource includes a frequency domain resource for receiving a broadcast service, and the radio resource is a radio resource used by the terminal device in a connected state. If the radio resource used by the terminal device in a connected state includes the frequency domain resource for receiving a broadcast service, the terminal device may continuously receive the broadcast service in a process of switching from the non-connected state to the connected state, and the reception is not interrupted. If the radio resource used by the terminal device in a connected state does not include the frequency domain resource for receiving a broadcast service, the terminal device suspends reception of the broadcast service in a process of switching from the non-connected state to the connected state, and the reception is interrupted. Therefore, after obtaining the foregoing information, the MCE can better analyze the application layer measurement result based on a status of receiving the broadcast service by the terminal device.

In a possible implementation, the terminal device may further send fifth indication information to the second access network device, where the fifth indication information indicates that the terminal device has the configuration information of the application layer measurement or has the application layer measurement result. Further, the fifth indication information may indicate that the terminal device has the configuration information of the application layer measurement before entering a connected state or before entering a non-connected state. The fifth indication information may further indicate the application layer measurement identifier.

The second access network device determines, based on the fifth indication information, that the terminal device has the configuration information of the application layer measurement or has the application layer measurement result, so that the second access network device can configure a signaling radio bearer 4 (signaling radio bearer, SRB 4) for the terminal device, and the second access network device determines that the configuration information of the application layer measurement does not need to be configured for the terminal device. The SRB 4 is used by the terminal device to report the application layer measurement result. In addition, after the access network device obtains the application layer measurement identifier, if the second access network device configures other configuration information of the application layer measurement for the terminal device, the second access network device may allocate another application layer measurement identifier to the terminal device, to avoid allocating a same application layer measurement identifier to two pieces of configuration information of the application layer measurement.

In a possible implementation, when the terminal device sends the second indication information to the second access network device, the terminal device further sends, to the second access network device, a trace identifier of the logged MDT measurement associated with the application layer measurement. When the second access network device subsequently sends the application layer measurement result to the MCE based on the trace identifier of the logged MDT measurement, the second access network device further sends the trace identifier of the logged MDT measurement. When sending a measurement result of immediate MDT measurement to a TCE, the second access network device may further send the trace identifier of the logged MDT measurement. In this way, the MCE or the TCE subsequently can learn that the logged MDT measurement and the immediate MDT measurement are for a same terminal device.

In a possible implementation, when the terminal device sends the second indication information to the second access network device, the terminal device further sends, to the second access network device, the QoE reference corresponding to the application layer measurement. In this way, the second access network device includes the QoE reference when sending the application layer measurement result to the MCE. Because the QoE reference identifies the application layer measurement, the network side can quickly determine the application layer measurement corresponding to the application layer measurement result.

In this application, if the second access network device determines, based on the fourth indication information, that the terminal device requests to associate the application layer measurement with the signaling-based logged MDT measurement, the second access network device further needs to request a core network side to configure configuration information of signaling-based immediate MDT measurement for the terminal device. For details, refer to descriptions in S205 to S207. If the second access network device determines, based on the fourth indication information, that the terminal device requests to associate the application layer measurement with the management-based logged MDT measurement, the second access network device may directly configure configuration information of management-based immediate MDT measurement for the terminal device. For details, refer to descriptions in S207.

S205: The second access network device sends sixth indication information to the core network device.

The sixth indication information is used to request to configure, for the terminal device, the configuration information of the MDT measurement performed by the terminal device when the terminal device is in a connected state. Alternatively, the sixth indication information indicates that the terminal device is performing the application layer measurement on a broadcast service. Alternatively, the sixth indication information indicates that the terminal device is receiving a broadcast service. For ease of description, in this application, the configuration information of the MDT measurement performed by the terminal device when the terminal device is in a connected state is referred to as first configuration information. Optionally, the second access network device further sends, to the core network device, an identifier indicating specific broadcast services corresponding to the application layer measurement that is being performed by the terminal device or indicating specific broadcast services that are being received by the terminal device, for example, sends an identifier of a broadcast service.

In an implementation, the second access network device sends the sixth indication information to the core network device when determining that the terminal device requests to associate the application layer measurement with the signaling-based logged MDT measurement, that is, when determining that the MDT measurement performed by the terminal device when the terminal device is in a non-connected state is the signaling-based logged MDT measurement. In another implementation, the second access network device does not send the sixth indication information when determining that the terminal device requests to associate the application layer measurement with the management-based logged MDT measurement.

In an implementation, the second access network device sends the sixth indication information to the core network device when determining that the terminal device is performing the application layer measurement on a broadcast service or when determining that the terminal device is receiving a broadcast service. In this case, the sixth indication information indicates that the terminal device is performing the application layer measurement on the broadcast service or receiving the broadcast service. In another implementation, the second access network device does not send the sixth indication information when determining that the terminal device does not perform the application layer measurement on a broadcast service or when determining that the terminal device does not receive a broadcast service.

Optionally, the second access network device further sends the trace identifier of the logged MDT measurement to the core network device.

Optionally, the second access network device further sends the QoE reference to the core network device.

S206: The core network device sends the first configuration information to the second access network device based on the sixth indication information. Correspondingly, the second access network device receives the first configuration information from the core network device, where the first configuration information is used by the terminal device to perform the MDT measurement in a connected state.

Content included in the first configuration information is not limited in this application. For example, the first configuration information may include at least one of the following: a trace identifier; a trace collection entity identifier; an MDT measurement indicator; and a recording interval and duration of the MDT measurement.

In an implementation, the second access network device sends the sixth indication information if the second access network device determines that the terminal device requests to associate the application layer measurement with the signaling-based logged MDT measurement. In this case, the sixth indication information is used to request to configure, for the terminal device, the configuration information of the MDT measurement performed by the terminal device when the terminal device is in a connected state. The core network device determines, based on the sixth indication information, that the configuration information of the signaling-based immediate MDT measurement needs to be configured. In other words, in this implementation, the first configuration information is configuration information of the signaling-based MDT measurement performed by the terminal device when the terminal device is in a connected state.

In an implementation, the second access network device sends the sixth indication information to the core network device when determining that the terminal device is performing the application layer measurement on a broadcast service or determining that the terminal device is receiving a broadcast service. In this case, the core network device may determine, based on the application layer measurement identifier of the application layer measurement, whether the association between the application layer measurement and the MDT measurement performed by the terminal device when the terminal device is in a non-connected state is previously configured for the terminal device. Further, if the core network device determines that the association between the application layer measurement and the MDT measurement performed by the terminal device when the terminal device is in a non-connected state has been configured, the core network device may configure the configuration information of the signaling-based immediate MDT measurement for the terminal device based on the sixth indication information. In other words, in this implementation, the first configuration information is configuration information of the signaling-based MDT measurement performed by the terminal device when the terminal device is in a connected state.

In an example, the core network device sends the trace identifier of the logged MDT measurement to the second access network device, or the trace identifier carried in the first configuration information is the same as the trace identifier of the logged MDT measurement.

In an example, when sending the first configuration information to the second access network device, the core network device includes indication information, where the indication information indicates that the trace identifier carried in the first configuration information is the same as the trace identifier of the logged MDT measurement.

In an example, when sending the first configuration information to the second access network device, the core network device includes the QoE reference sent by the second access network device to the core network, so that the second access network device can learn of a measurement result of specific application layer measurement that needs to be associated with a measurement result of the immediate MDT measurement.

S207: The second access network device sends the first configuration information to the terminal device based on the second indication information.

In an implementation, if the third configuration information configured by the first access network device for the terminal device in S201 is configuration information of the signaling-based MDT measurement performed by the terminal device when the terminal device is in a non-connected state, the first configuration information is from the core network device, and the first configuration information is the configuration information of the signaling-based MDT measurement performed by the terminal device when the terminal device is in a connected state.

In this implementation, if the first configuration information does not include an MDT measurement indicator that needs to be performed by the terminal device, but includes an MDT measurement indicator that needs to be performed by the access network device, the second access network device may not send the first configuration information to the terminal device, but performs the MDT measurement based on the first configuration information. For example, the MDT measurement indicator in the first configuration information is traffic of a service, a throughput of a service, and a service delay. Because these indicators are measured by the access network device, the second access network device may not send the first configuration information to the terminal device, but measures the traffic of the service, the throughput of the service, and the service delay based on the first configuration information.

In an implementation, if the third configuration information configured by the first access network device for the terminal device in S201 is configuration information of the management-based MDT measurement performed by the terminal device when the terminal device is in a non-connected state, S205 and S206 do not need to be performed. In this case, the first configuration information is configured by the second access network device, and the first configuration information is configuration information of management-based MDT measurement performed by the terminal device when the terminal device is in a connected state.

S208: The terminal device sends a measurement result to the second access network device.

Specifically, the measurement result sent by the terminal device to the second access network device includes at least one of the following:
a measurement result of the MDT measurement performed by the terminal device when the terminal device is in a non-connected state based on the third configuration information;
a measurement result of the application layer measurement performed by the terminal device when the terminal device is in a non-connected state based on the second configuration information;
a measurement result of the MDT measurement performed by the terminal device when the terminal device is in a connected state based on the first configuration information; and
a measurement result of application layer measurement performed by the terminal device when the terminal device is in a connected state based on the second configuration information.

How the terminal device specifically reports the measurement result is not limited in this application, and details are not described herein.

The measurement result of the MDT measurement and the measurement result of the application layer measurement may be sent by using one message, or may be separately sent by using a plurality of messages. This is not limited in this application.

S209: The second access network device sends the measurement result of the application layer measurement to the MCE, and sends the measurement result of the MDT measurement to the TCE.

The MCE or the TCE associate the measurement result of the application layer measurement, the measurement result of the MDT measurement performed by the terminal device when the terminal device is in a non-connected state, and the measurement result of the MDT measurement performed by the terminal device when the terminal device is in a connected state, to analyze a relationship between these measurement results. How the MCE or the TCE specifically analyzes the relationship between these measurement results is not limited in this application. For example, the MCE or the TCE finds, based on a time period corresponding to the measurement result of the application layer measurement, a measurement result of the MDT measurement corresponding to the time period (including the measurement result of the MDT measurement performed by the terminal device when the terminal device is in a non-connected state and/or the measurement result of the MDT measurement performed by the terminal device when the terminal device is in a connected state, which are collectively referred to as a radio side measurement result below for ease of description), to analyze whether deterioration or degradation of the application layer measurement result is caused by deterioration or degradation of the radio side measurement result. For example, if both the radio side measurement result and the measurement result of the application layer measurement are poor, it may be considered that the deterioration or degradation of the application layer measurement result is caused by the deterioration or degradation of the radio side measurement result.

Optionally, the MCE in this embodiment of this application may be replaced with the TCE, that is, the MCE and the TCE are a same entity. Optionally, the MCE and the TCE in this embodiment of this application may be different entities.

According to the foregoing method, if the network side configures that the application layer measurement and the MDT measurement performed by the terminal device when the terminal device is in a non-connected state are associated, when the terminal device is in a connected state again and accesses the second access network device, the terminal device requests the second access network device to associate the MDT measurement and the application layer measurement. In this way, the network side can determine that the application layer measurement and the MDT measurement performed by the terminal device when the terminal device is in a connected state also need to be associated, so that the configuration information of the MDT measurement performed by the terminal device when the terminal device is in a connected state can be configured for the terminal device, to associate the application layer measurement and the MDT measurement performed by the terminal device when the terminal device is in a connected state. This helps the network side obtain a complete association relationship between the measurement result of the application layer measurement and the measurement result of the MDT measurement. Therefore, when user experience is poor because a problem occurs in the application layer measurement result, the network side may determine, based on the measurement result of the MDT measurement, whether the problem that occurs in the application layer measurement result is caused by signal quality on a radio side, so that the measurement result of the MDT measurement can be used for locating a problem at an application layer, thereby improving accuracy of problem locating.

In a second implementation of this application, when the terminal device is in a connected state, the first access network device may configure, for the terminal device, the configuration information of the application layer measurement and the configuration information of the MDT measurement performed by the terminal device when the terminal device is in a non-connected state, and indicate, to the terminal device by using the first indication information, that the MDT measurement and the application layer measurement are to be associated. When being in a non-connected state, the terminal device may perform the MDT measurement based on the configuration information of the MDT measurement, and perform the application layer measurement based on the configuration information of the application layer measurement. If the MDT measurement is the signaling-based MDT measurement, when the terminal device is in a connected state again, if the terminal device switches to the second access network device, the network side may configure, for the terminal device, the configuration information of the signaling-based MDT measurement performed by the terminal device when the terminal device is in a connected state. In this way, the network side may continue to associate the application layer measurement and the MDT measurement performed by the terminal device when the terminal device is in a connected state. The following describes the foregoing process by using a specific procedure.

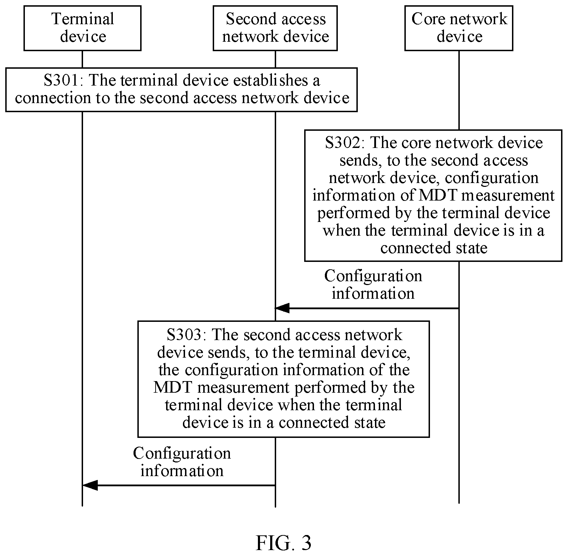

FIG. 3 is a schematic flowchart of a measurement method according to an embodiment of this application. A procedure of the method is similar to the procedure shown in FIG. 2A and FIG. 2B, and a difference lies in that the procedure is applicable to signaling-based MDT measurement, and S204 to S207 in the procedure in FIG. 2A and FIG. 2B need to be replaced with the following procedure, and the remaining procedure in FIG. 2A and FIG. 2B may also be combined with the following procedure. Details are not described herein.

S301: A terminal device establishes a connection to a second access network device.

Before the terminal device establishes the connection to the second access network device, the terminal device is disconnected from a first access network device and is in an idle state or an inactive state.

If the second access network device and the first access network device are a same device, this step indicates that the terminal device re-establishes a connection to the second access network device. If the second access network device and the first access network device are different devices, this step indicates that the terminal device switches from the first access network device to the second access network device.

A specific process of establishing a connection is not limited in this application. After the connection is established, the second access network device may report information such as an identifier of the terminal device to a core network device. For example, the terminal device sends the identifier of the terminal device to the second access network device, and then the second access network device sends the identifier of the terminal device to the core network device.

The core network device determines, based on the identifier of the terminal device, that configuration information of MDT measurement performed by the terminal device when the terminal device is in a non-connected state has been configured for the terminal device, and the application layer measurement and the MDT measurement performed by the terminal device when the terminal device is in a non-connected state are associated. To continue to associate the application layer measurement and MDT measurement performed by the terminal device when the terminal device is in a connected state, the core network device may configure, for the terminal device, configuration information of the MDT measurement performed by the terminal device when the terminal device is in a connected state.

S302: The core network device sends, to the second access network device, the configuration information of the MDT measurement performed by the terminal device when the terminal device is in a connected state.

The MDT measurement herein may be signaling-based MDT measurement. For specific content of the configuration information, refer to the descriptions of the first configuration information in S207. This is not limited in this application, and details are not described herein.

Optionally, the core network device further sends a QoE reference to the second access network device, so that the second access network device can learn of, based on the QoE reference, a specific measurement result of the application layer measurement with which a measurement result of the MDT measurement needs to be associated.

S303: The second access network device sends, to the terminal device, the configuration information of the MDT measurement performed by the terminal device when the terminal device is in a connected state.

According to the foregoing method, if the network side configures that the application layer measurement and the MDT measurement performed by the terminal device when the terminal device is in a non-connected state are associated, when the terminal device is in a connected state again and accesses the second access network device, the network side may actively request to associate the MDT measurement and the application layer measurement, so that the configuration information of the MDT measurement performed by the terminal device when the terminal device is in a connected state can be configured for the terminal device, to associate the application layer measurement and the MDT measurement performed by the terminal device when the terminal device is in a connected state. Therefore, when user experience is poor because a problem occurs in the application layer measurement result, the network side may determine, based on the measurement result of the MDT measurement, whether the problem that occurs in the application layer measurement result is caused by signal quality on a radio side, so that the measurement result of the MDT measurement can be used for locating a problem at an application layer, thereby improving accuracy of problem locating.

In a third implementation of this application, when the terminal device is in a connected state, the first access network device may configure, for the terminal device, the configuration information of the application layer measurement and the configuration information of the MDT measurement performed by the terminal device when the terminal device is in a non-connected state, and indicate, to the terminal device by using the first indication information, that the MDT measurement and the application layer measurement are to be associated. When being in a non-connected state, the terminal device may perform the MDT measurement based on the configuration information of the MDT measurement, and perform the application layer measurement based on the configuration information of the application layer measurement. When the terminal device is in a connected state again, the terminal device may continue to perform measurement based on the configuration information of the MDT measurement. In this way, the network side may continue to associate the application layer measurement and the MDT measurement performed by the terminal device when the terminal device is in a connected state. The following describes the foregoing process by using a specific procedure.

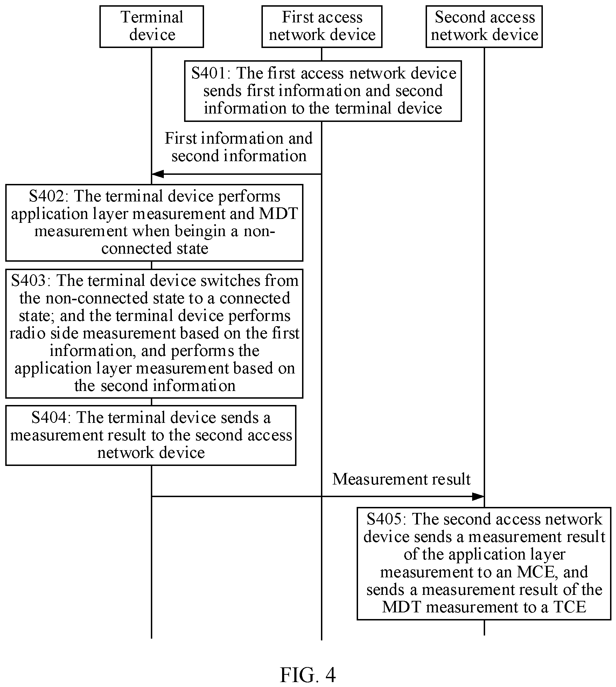

FIG. 4 is a schematic flowchart of a measurement method according to an embodiment of this application. A procedure of the method is similar to the procedure shown in FIG. 2A and FIG. 2B, and a difference lies in that in this procedure, a network side does not configure, for a terminal device, configuration information of MDT measurement performed by the terminal device when the terminal device is in a connected state.

S401: A first access network device sends first information and second information to the terminal device.

The first information includes configuration information of MDT measurement performed by the terminal device when the terminal device is in a non-connected state, and the second information includes configuration information of application layer measurement performed by the terminal device.

The first information and the second information may be sent by using one message, or may be separately sent by using a plurality of messages. This is not limited in this application. For example, the first access network device may send the first information by using one RRC message, and send the second information by using another RRC message.

Content included in the first information is not limited in this application. For example, for the content, refer to the descriptions of the third configuration information. Content included in the second information is not limited in this application. For example, for the content, refer to the descriptions of the second configuration information.

In a possible implementation, the first access network device may further send first indication information and third indication information to the terminal device. For details, refer to the descriptions in S202. The details are not described herein.

Optionally, the first access network device further sends seventh indication information to the terminal device, where the seventh indication information indicates the terminal device to continue to perform measurement based on the first information when the terminal device switches from the non-connected state to the connected state.

S402: The terminal device performs the application layer measurement and the MDT measurement when being in a non-connected state.

The terminal device performs the MDT measurement based on the first information, and performs the application layer measurement based on the second information. A specific measurement process is not limited in this application, and details are not described herein.

In this application, the terminal device may further switch from the non-connected state to the connected state. Descriptions are provided below by using an example in which the terminal device switches to the connected state by establishing a connection to a second access network device.

S403: The terminal device switches from the non-connected state to the connected state; and the terminal device performs radio side measurement based on the first information, and performs the application layer measurement based on the second information.

How the terminal device specifically performs measurement result is not limited in this application. In an implementation, it is assumed that the terminal device measures or records signal quality of a current serving cell and a neighboring cell based on the first information when the terminal device is in a non-connected state. When the terminal device is in a connected state, the terminal device may periodically measure or record the signal quality of the current serving cell and the neighboring cell based on a measurement periodicity in the first information, or may measure or record the signal quality of the serving cell and the neighboring cell based on another measurement periodicity (for example, a measurement periodicity defined by the terminal device).

In an implementation, a measurement result obtained by the terminal device based on the first information when the terminal device is in a connected state may include measurement indication information, where the measurement indication information indicates that the measurement result is obtained through measurement performed by the terminal device when the terminal device is in a connected state.

It should be noted that, in this application, that the terminal device performs radio side measurement based on the first information may mean that the terminal device continues to perform the MDT measurement when the terminal device is in a connected state, or may mean that the terminal device continues to perform measurement only based on the first information when the terminal device is in a connected state but does not mean that the terminal device continues to perform the MDT measurement when the terminal device is in a connected state.

S404: The terminal device sends a measurement result to the second access network device.

Specifically, the measurement result sent by the terminal device to the second access network device includes at least one of the following:
a first measurement result; a second measurement result; a third measurement result; and a fourth measurement result.

The first measurement result is obtained by performing measurement by the terminal device based on the first information when the terminal device is in a non-connected state based on the first information, and the second measurement result is obtained by performing measurement by the terminal device based on the first information when the terminal device is in a non-connected state based on the second information.

The third measurement result is obtained by performing measurement by the terminal device based on the first information when the terminal device is in a connected state, and the fourth measurement result is obtained by performing measurement by the terminal device based on the second information when the terminal device is in a connected state.

The first measurement result, the second measurement result, the third measurement result, and the fourth measurement result may be sent by using one message, or may be separately sent by using a plurality of messages. This is not limited in this application.

S405: The second access network device sends the measurement result of the application layer measurement to the MCE, and sends the measurement result of the MDT measurement to the TCE.

According to the method, if a network side configures that the application layer measurement and the MDT measurement performed by the terminal device when the terminal device is in a non-connected state are to be associated, when the terminal device is in a connected state again, the terminal device may continue to perform measurement based on the configuration information of the MDT measurement, and report a measurement result. In this way, the network side can continue to associate the application layer measurement and the measurement performed by the terminal device when the terminal device is in a connected state, so that the network side obtains a complete association relationship between the measurement result of the application layer measurement and a measurement result of the radio side measurement. In addition, the terminal device may reuse the configuration information of the MDT measurement performed by the terminal device when the terminal device is in a non-connected state, thereby reducing signaling overheads.

In a fourth implementation of this application, after the terminal device in an inactive state accesses the second access network device, the first access network device notifies the second access network device that the application layer measurement and the MDT measurement performed by the terminal device need to be associated. The second access network device sends configuration information of immediate MDT measurement to the terminal device. The following describes the foregoing process by using a specific procedure.

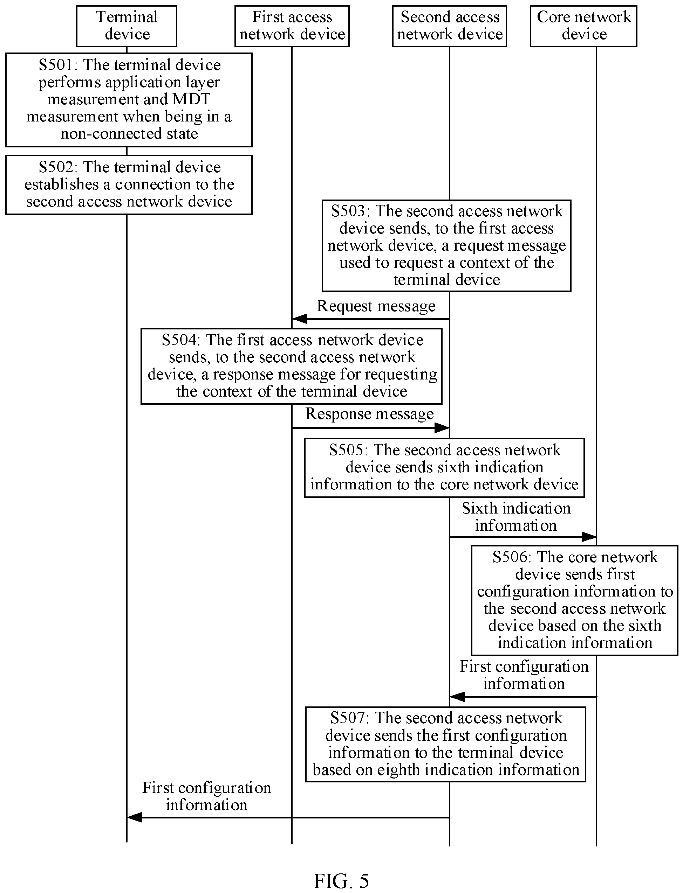

FIG. 5 is a schematic flowchart of a measurement method according to an embodiment of this application. A procedure of the method is similar to the procedure shown in FIG. 2A and FIG. 2B, and a difference lies in that in this procedure, a terminal device does not send the second indication information in the procedure in FIG. 2A and FIG. 2B to a second access network device, and a first access network device requests, from the second access network device, information about association between application layer measurement and MDT measurement performed by the terminal device.

S501: The terminal device performs the application layer measurement and the MDT measurement when being in a non-connected state.

The method may further include S201 and S202 before S501. For details, refer to the foregoing descriptions. The details are not described herein.

The terminal device is in an RRC inactive state in a non-connected state.

S502: The terminal device establishes a connection to the second access network device.

A specific process of establishing a connection is not limited in this application.

In an example, after establishing the connection to the second access network device, the terminal device may send information such as fourth indication information to the second access network device. For the fourth indication information, refer to the descriptions in S204. Details are not described herein.

S503: The second access network device sends, to the first access network device, a request message used to request a context of the terminal device.

S504: The first access network device sends, to the second access network device, a response message for requesting the context of the terminal device.

The response message for requesting the context of the terminal device carries information such as eighth indication information and the context of the terminal device. In a possible implementation, the eighth indication information indicates to request to associate the MDT measurement and the application layer measurement. Specifically, the eighth indication information indicates to request the association between the application layer measurement and the MDT measurement performed by the terminal device when the terminal device is in a connected state. In another implementation, the eighth indication information indicates to request to configure the association between the MDT measurement and the application layer measurement. In another implementation, the eighth indication information indicates that the terminal device receives the first indication information before accessing the second access network device.

In an example, the response message for requesting the context of the terminal device carries a QoE reference corresponding to application layer measurement, so that the second access network device can learn of, based on the QoE reference, a specific measurement result of the application layer measurement with which a measurement result of the MDT measurement is to be associated.

In an example, the response message for requesting the context of the terminal device carries ninth indication information, where the ninth indication information indicates that the MDT measurement performed by the terminal device when the terminal device is in a non-connected state is signaling-based MDT measurement or management-based MDT measurement.

In an example, if the second access network device determines, based on the fourth indication information, that the terminal device requests to associate the application layer measurement with the signaling-based logged MDT measurement, the second access network device further requests a core network side to configure configuration information of signaling-based immediate MDT measurement for the terminal device. For details, refer to descriptions in S505 to S507. If the second access network device determines, based on the fourth indication information, that the terminal device requests to associate the application layer measurement with management-based logged MDT measurement, the second access network device may directly configure configuration information of management-based immediate MDT measurement for the terminal device. For details, refer to descriptions in S507.

Optionally, if the second access network device determines, based on the ninth indication information, that before the terminal device accesses the second access network device, the application layer measurement is associated with the signaling-based logged MDT measurement, the second access network device further requests a core network side to configure configuration information of signaling-based immediate MDT measurement for the terminal device. For details, refer to descriptions in S505 to S507. If the second access network device determines, based on the ninth indication information, that before the terminal device accesses the second access network device, the application layer measurement is associated with management-based logged MDT measurement, the second access network device may directly configure configuration information of management-based immediate MDT measurement for the terminal device. For details, refer to descriptions in S507.

S505: The second access network device sends sixth indication information to a core network device.

For the sixth indication information, refer to the descriptions in S205. Details are not described herein.

S506: The core network device sends the first configuration information to the second access network device based on the sixth indication information.

For the first configuration information, refer to the descriptions in S206. Details are not described herein.

S507: The second access network device sends the first configuration information to the terminal device based on the eighth indication information.

Descriptions of S505 to S507 are the same as the descriptions of S205 to S207 in FIG. 2B, and details are not described herein.

Further, the terminal device may perform measurement based on the first configuration information, and report a measurement result. For details, refer to the descriptions in S208 and S209. The details are not described herein.

According to the foregoing method, if the network side configures that the application layer measurement and the MDT measurement performed by the terminal device when the terminal device is in an RRC inactive state are associated, when the terminal device is in a connected state again and accesses the second access network device, the response message that is for requesting the context of the terminal device and that is received by the second access network device from the first access network device carries indication information indicating that the MDT measurement and the application layer measurement need to be associated. In this way, the second access network device can determine that the application layer measurement and the MDT measurement performed by the terminal device when the terminal device is in a connected state also need to be associated, so that the configuration information of the MDT measurement performed by the terminal device when the terminal device is in a connected state can be configured for the terminal device, to associate the application layer measurement and the MDT measurement performed by the terminal device when the terminal device is in a connected state. This helps the network side obtain a complete association relationship between the measurement result of the application layer measurement and the measurement result of the MDT measurement. Therefore, when user experience is poor because a problem occurs in the application layer measurement result, the network side may determine, based on the measurement result of the MDT measurement, whether the problem that occurs in the application layer measurement result is caused by signal quality on a radio side, so that the measurement result of the MDT measurement can be used for locating a problem at an application layer, thereby improving accuracy of problem locating.

In the foregoing embodiments provided in this application, the method provided in embodiments of this application is described from a perspective of interaction between devices. To implement functions in the method provided in embodiments of this application, the access network device or the terminal device may include a hardware structure and/or a software module, and implements the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

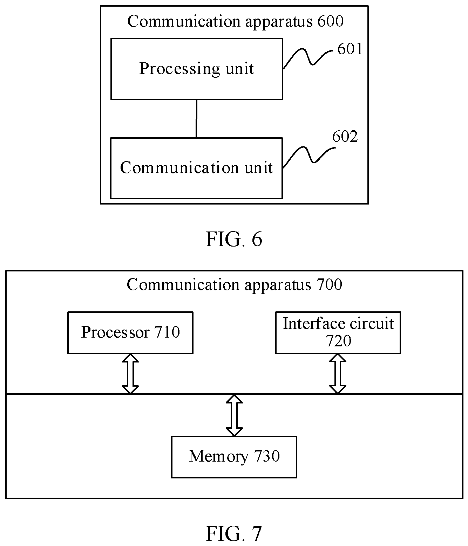

Same as the foregoing concept, FIG. 6 is a diagram of a structure of a communication apparatus according to an embodiment of this application. The communication apparatus is configured to implement a function of the access network device or the terminal device in the foregoing method. For example, the apparatus may be a software module or a chip system. In this embodiment of this application, the chip system may include a chip, or may include a chip and another discrete component. The communication apparatus 600 may include a processing unit 601 and a communication unit 602.

In this embodiment of this application, the communication unit may also be referred to as a transceiver unit, and may include a sending unit and/or a receiving unit, which are respectively configured to perform sending and receiving steps of the access network device or the terminal device in the foregoing method embodiment.

Communication apparatuses provided in embodiments of this application are described below in detail with reference to FIG. 6 and FIG. 7. It should be understood that descriptions of apparatus embodiments correspond to descriptions of method embodiment. Therefore, for content that is not described in detail, refer to the method embodiment. For brevity, details are not described herein.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 602 and that is configured to implement a receiving function may be considered as the receiving unit, and a component that is in the communication unit 602 and that is configured to implement a sending function may be considered as the sending unit. In other words, the communication unit 602 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 600 performs a function of the terminal device in the procedures shown in FIG. 2A and FIG. 2B to FIG. 5 in the foregoing embodiments:
the processing unit is configured to receive first indication information from a first access network device through a communication unit, where the first indication information indicates that minimization of drive-tests measurement and application layer measurement are to be associated, where
the processing unit is configured to send second indication information to a second access network device through the communication unit, where the second indication information is used to request to associate the minimization of drive-tests measurement and the application layer measurement.

In a possible implementation, the first indication information indicates that the application layer measurement and the minimization of drive-tests measurement performed by the terminal device when the terminal device is in a non-connected state are to be associated; and the second indication information is used to request to associate the application layer measurement and the minimization of drive-tests measurement performed by the terminal device when the terminal device is in a non-connected state.

In a possible implementation, the communication unit is further configured to receive third indication information from the first access network device, where the third indication information indicates that the minimization of drive-tests measurement performed by the terminal device when the terminal device is in a non-connected state is signaling-based logged minimization of drive-tests measurement or management-based logged minimization of drive-tests measurement.

In a possible implementation, the communication unit is further configured to send fourth indication information to the second access network device, where the fourth indication information indicates that the minimization of drive-tests measurement performed by the terminal device when the terminal device is in a non-connected state is the signaling-based minimization of drive-tests measurement or the management-based minimization of drive-tests measurement; or the fourth indication information indicates that the terminal device has configuration information of the signaling-based logged minimization of drive-tests measurement or has configuration information of the management-based logged minimization of drive-tests measurement.

In a possible implementation, the communication unit is further configured to:
receive configuration information of the application layer measurement from the first access network device; and
send fifth indication information to the second access network device, where the fifth indication information indicates that the terminal device has the configuration information of the application layer measurement.

In a possible implementation, the processing unit is further configured to:
perform the minimization of drive-tests measurement based on first configuration information, where the first configuration information is configured by the second access network device, and the first configuration information is used by the terminal device to perform minimization of drive-tests measurement when the terminal device is in a connected state; and
the communication unit is further configured to send a measurement result of the minimization of drive-tests measurement to the second access network device.

In a possible implementation, the processing unit is further configured to:
perform the application layer measurement based on second configuration information, where the second configuration information is configured by the first access network device before the terminal device accesses the second access network device, and the second configuration information is used by the terminal device to perform the application layer measurement; and
the communication unit is further configured to send a measurement result of the application layer measurement to the second access network device.

When the communication apparatus 600 performs a function of the second access network device in the procedures shown in FIG. 2A and FIG. 2B to FIG. 5 in the foregoing embodiments:
the processing unit is configured to receive second indication information from a terminal device through a communication unit, where the second indication information is used to request to associate minimization of drive-tests measurement and application layer measurement, where
the communication unit is configured to send first configuration information to the terminal device based on the second indication information, where the first configuration information is used by the terminal device to perform minimization of drive-tests measurement when the terminal device is in a connected state.

In a possible implementation, the communication unit is further configured to:
receive fourth indication information from the terminal device, where the fourth indication information indicates that minimization of drive-tests measurement performed by the terminal device when the terminal device is in a non-connected state is signaling-based minimization of drive-tests measurement or management-based minimization of drive-tests measurement; or the fourth indication information indicates that the terminal device has configuration information of signaling-based logged minimization of drive-tests measurement or has configuration information of management-based logged minimization of drive-tests measurement.

In a possible implementation, the communication unit is further configured to:
receive fifth indication information from the terminal device, where the fifth indication information indicates that the terminal device has configuration information of the application layer measurement.

In a possible implementation, if it is determined, based on the fourth indication information, that the minimization of drive-tests measurement performed by the terminal device when the terminal device is in a non-connected state is the signaling-based logged minimization of drive-tests measurement, the communication unit is further configured to: send sixth indication information to a core network device, where the sixth indication information is used to request to configure, for the terminal device, configuration information of the minimization of drive-tests measurement performed by the terminal device when the terminal device is in a connected state, or indicates the terminal device to perform the application layer measurement on a broadcast service; and receive the first configuration information from the core network device.

In a possible implementation, the communication unit is further configured to: receive a measurement result of the minimization of drive-tests measurement and a measurement result of the application layer measurement from the terminal device.

In a possible implementation, the communication unit is further configured to: send the measurement result of the application layer measurement to a measurement collection entity, and send the measurement result of the minimization of drive-tests measurement to a trace collection entity.

When the communication apparatus 600 performs a function of the terminal device in the procedures shown in FIG. 2A and FIG. 2B to FIG. 5 in the foregoing embodiments:
the communication unit is configured to receive first information and second information from a first access network device, where the first information includes configuration information of minimization of drive-tests measurement performed by the terminal device when the terminal device is in a non-connected state, and the second information includes configuration information of application layer measurement performed by the terminal device; and
the processing unit is configured to switch from the non-connected state to a connected state; and perform radio side measurement based on the first information, and perform the application layer measurement based on the second information.

In a possible implementation, the communication unit is further configured to: receive first indication information from the first access network device, where the first indication information indicates that the minimization of drive-tests measurement and the application layer measurement are to be associated.

In a possible implementation, the processing unit is configured to switch to the connected state by establishing a connection to a second access network device.

In a possible implementation, the communication unit is further configured to: send a first measurement result and a second measurement result to the second access network device, where the first measurement result is obtained by performing measurement by the terminal device based on the first information when the terminal device is in a non-connected state based on the first information, and the second measurement result is obtained by performing measurement by the terminal device based on the first information when the terminal device is in a non-connected state based on the second information.

In a possible implementation, the communication unit is further configured to: send a third measurement result and a fourth measurement result to the second access network device, where the third measurement result is obtained by performing measurement by the terminal device based on the first information when the terminal device is in a connected state, and the fourth measurement result is obtained by performing measurement by the terminal device based on the second information when the terminal device is in a connected state.

The foregoing is merely an example. The processing unit 601 and the communication unit 602 may further perform other functions. For more detailed descriptions, refer to the related descriptions in the method embodiments shown in FIG. 2A and FIG. 2B to FIG. 5. Details are not described herein.

FIG. 7 is a diagram of a structure of a communication apparatus according to an embodiment of this application. The apparatus shown in FIG. 7 may be an implementation of a hardware circuit of the apparatus shown in FIG. 6. The communication apparatus is applicable to the foregoing flowcharts, and performs the function of the terminal device or the access network device in the foregoing method embodiment. For ease of description, FIG. 7 shows only main components of the communication apparatus.

As shown in FIG. 7, a communication apparatus 700 includes a processor 710 and an interface circuit 720. The processor 710 and the interface circuit 720 are coupled to each other. It may be understood that the interface circuit 720 may be a transceiver, a pin, an interface circuit, or an input/output interface. Optionally, the communication apparatus 700 may further include a memory 730, configured to store instructions executed by the processor 710, or store input data required by the processor 710 to run instructions, or store data generated after the processor 710 runs instructions.

When the communication apparatus 700 is configured to implement the methods shown in FIG. 2A and FIG. 2B to FIG. 5, the processor 710 is configured to implement a function of the processing unit 601, and the interface circuit 720 is configured to implement a function of the communication unit 602.

It may be understood that, the processor in embodiments of this application may be a central processing unit, or may be another general-purpose processor, a digital signal processor, an application-specific integrated circuit, or another programmable logic device, a transistor logic device, a hardware component, or any combination thereof. The general-purpose processor may be a microprocessor or any regular processor.

The memory in embodiments of this application may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It should be understood that the term "and/or" in this specification describes only an association relationship between associated objects and represents that three relationships may exist. For example, A and/or B may represent the following three cases: Only A exists, both A and B exist, and only B exists. In addition, a symbol "/" in this application may represent "and/or". For example, A/B represents A and/or B.

It should be understood that, in embodiments of the present invention, "B corresponding to A" indicates that B is associated with A, and B can be determined based on A. However, it should be further understood that determining B based on A does not mean that B is determined based only on A, and B may alternatively be determined based on A and/or other information.

"A plurality of" in embodiments of this application refers to two or more than two.

Descriptions such as "first" and "second" in embodiments of this application are merely used for illustration and distinguishing between described objects, do not represent a sequence or indicate a special limitation on a quantity of described objects in embodiments of this application, and cannot constitute any limitation on embodiments of this application.

Unless otherwise specified, "transmission" (transmit/transmission) in embodiments of this application refers to bidirectional transmission, and includes a sending action and/or a receiving action. Specifically, "transmission" in embodiments of this application includes data sending, data receiving, or data sending and receiving. In other words, data transmission herein includes uplink data transmission and/or downlink data transmission. The data may include information and/or a signal. The uplink data transmission is transmission of uplink information and/or an uplink signal, and the downlink data transmission is transmission of downlink information and/or a downlink signal.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that in embodiments of this application, the terminal device and/or the access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A measurement method, comprising:
receiving, by a terminal device, first indication information from a first access network device, wherein the first indication information indicates that minimization of drive-tests measurement and application layer measurement are to be associated; and
sending, by the terminal device, second indication information to a second access network device, wherein the second indication information is used to request to associate the minimization of drive-tests measurement and the application layer measurement.

2. The method according to claim 1, wherein the first indication information indicates that the application layer measurement and minimization of drive-tests measurement performed by the terminal device when the terminal device is in a non-connected state are to be associated; and
the second indication information is used to request to associate the application layer measurement and the minimization of drive-tests measurement performed by the terminal device when the terminal device is in a non-connected state.

3. The method according to claim 2, wherein the method further comprises:
receiving, by the terminal device, third indication information from the first access network device, wherein the third indication information indicates that the minimization of drive-tests measurement performed by the terminal device when the terminal device is in a non-connected state is signaling-based logged minimization of drive-tests measurement or management-based logged minimization of drive-tests measurement.

4. The method according to claim 3, wherein the method further comprises:
sending, by the terminal device, fourth indication information to the second access network device, wherein
the fourth indication information indicates that the minimization of drive-tests measurement performed by the terminal device when the terminal device is in a non-connected state is the signaling-based minimization of drive-tests measurement or the management-based minimization of drive-tests measurement; or the fourth indication information indicates that the terminal device has configuration information of the signaling-based logged minimization of drive-tests measurement or has configuration information of the management-based logged minimization of drive-tests measurement.

5. The method according to any one of claims 1 to 3, wherein before the sending, by the terminal device, second indication information to a second access network device, the method further comprises: receiving, by the terminal device, configuration information of the application layer measurement from the first access network device; and
sending, by the terminal device, fifth indication information to the second access network device, wherein the fifth indication information indicates that the terminal device has the configuration information of the application layer measurement.

6. The method according to any one of claims 1 to 5, wherein the method further comprises:
performing, by the terminal device, the minimization of drive-tests measurement based on first configuration information, wherein the first configuration information is configured by the second access network device, and the first configuration information is used by the terminal device to perform minimization of drive-tests measurement when the terminal device is in a connected state; and
sending, by the terminal device, a measurement result of the minimization of drive-tests measurement to the second access network device.

7. The method according to any one of claims 1 to 6, wherein the method further comprises:
performing, by the terminal device, the application layer measurement based on second configuration information, wherein the second configuration information is configured by the first access network device before the terminal device accesses the second access network device, and the second configuration information is used by the terminal device to perform the application layer measurement; and
sending, by the terminal device, a measurement result of the application layer measurement to the second access network device.

8. A measurement method, comprising:
receiving, by a second access network device, second indication information from a terminal device, wherein the second indication information is used to request to associate minimization of drive-tests measurement and application layer measurement; and
sending, by the second access network device, first configuration information to the terminal device based on the second indication information, wherein the first configuration information is used by the terminal device to perform minimization of drive-tests measurement when the terminal device is in a connected state.

9. The method according to claim 8, wherein the method further comprises:
receiving, by the second access network device, fourth indication information from the terminal device, wherein the fourth indication information indicates that minimization of drive-tests measurement performed by the terminal device when the terminal device is in a non-connected state is signaling-based minimization of drive-tests measurement or management-based minimization of drive-tests measurement; or the fourth indication information indicates that the terminal device has configuration information of signaling-based logged minimization of drive-tests measurement or has configuration information of management-based logged minimization of drive-tests measurement.

10. The method according to claim 8 or 9, wherein the method further comprises:
receiving, by the second access network device, fifth indication information from the terminal device, wherein the fifth indication information indicates that the terminal device has configuration information of the application layer measurement.

11. The method according to claim 9, wherein if the second access network device determines, based on the fourth indication information, that the minimization of drive-tests measurement performed by the terminal device when the terminal device in a non-connected state is the signaling-based logged minimization of drive-tests measurement, the method further comprises:
sending, by the second access network device, sixth indication information to a core network device, wherein the sixth indication information is used to request to configure, for the terminal device, configuration information of the minimization of drive-tests measurement performed by the terminal device when the terminal device is in a connected state, or indicates the terminal device to perform the application layer measurement on a broadcast service; and
receiving, by the second access network device, the first configuration information from the core network device.

12. The method according to any one of claims 8 to 11, wherein the method further comprises:
receiving, by the second access network device, a measurement result of the minimization of drive-tests measurement and a measurement result of the application layer measurement from the terminal device.

13. The method according to claim 12, wherein the method further comprises:
sending, by the second access network device, the measurement result of the application layer measurement to a measurement collection entity, and sending the measurement result of the minimization of drive-tests measurement to a trace collection entity.

14. A measurement method, comprising:
receiving, by a terminal device, first information and second information from a first access network device, wherein the first information comprises configuration information of minimization of drive-tests measurement performed by the terminal device when the terminal device is in a non-connected state, and the second information comprises configuration information of application layer measurement performed by the terminal device; and
switching, by the terminal device, from the non-connected state to a connected state; and performing, by the terminal device, radio side measurement based on the first information, and performing the application layer measurement based on the second information.

15. The method according to claim 14, wherein the method further comprises:
receiving, by the terminal device, first indication information from the first access network device, wherein the first indication information indicates that the minimization of drive-tests measurement and the application layer measurement are to be associated.

16. The method according to claim 14 or 15, wherein the switching, by the terminal device, to a connected state comprises:
switching, by the terminal device, to the connected state by establishing a connection to a second access network device.

17. The method according to claim 16, wherein the method further comprises:
sending, by the terminal device, a first measurement result and a second measurement result to the second access network device, wherein
the first measurement result is obtained by performing measurement by the terminal device based on the first information when the terminal device is in a non-connected state, and the second measurement result is obtained by performing measurement by the terminal device based on the second information when the terminal device is in a non-connected state.

18. The method according to claim 16 or 17, wherein the method further comprises:
sending, by the terminal device, a third measurement result and a fourth measurement result to the second access network device, wherein
the third measurement result is obtained by performing measurement by the terminal device based on the first information when the terminal device is in a connected state, and the fourth measurement result is obtained by performing measurement by the terminal device based on the second information when the terminal device is in a connected state.

19. A communication apparatus, comprising:
a processing unit, configured to receive first indication information from a first access network device through a communication unit, wherein the first indication information indicates that minimization of drive-tests measurement and application layer measurement are to be associated, wherein
the processing unit is configured to send second indication information to a second access network device through the communication unit, wherein the second indication information is used to request to associate the minimization of drive-tests measurement and the application layer measurement.

20. The apparatus according to claim 19, wherein the first indication information indicates that the application layer measurement and minimization of drive-tests measurement performed by the terminal device when the terminal device is in a non-connected state are to be associated; and
the second indication information is used to request to associate the application layer measurement and the minimization of drive-tests measurement performed by the terminal device when the terminal device is in a non-connected state.

21. The apparatus according to claim 20, wherein the communication unit is further configured to:
receive third indication information from the first access network device, wherein the third indication information indicates that the minimization of drive-tests measurement performed by the terminal device when the terminal device is in a non-connected state is signaling-based logged minimization of drive-tests measurement or management-based logged minimization of drive-tests measurement.

22. The apparatus according to claim 21, wherein the communication unit is further configured to:
send fourth indication information to the second access network device, wherein
the fourth indication information indicates that the minimization of drive-tests measurement performed by the terminal device when the terminal device is in a non-connected state is the signaling-based minimization of drive-tests measurement or the management-based minimization of drive-tests measurement; or the fourth indication information indicates that the terminal device has configuration information of the signaling-based logged minimization of drive-tests measurement or has configuration information of the management-based logged minimization of drive-tests measurement.

23. The apparatus according to any one of claims 19 to 22, wherein the communication unit is further configured to:
receive configuration information of the application layer measurement from the first access network device; and
send fifth indication information to the second access network device, wherein the fifth indication information indicates that the terminal device has the configuration information of the application layer measurement.

24. The apparatus according to any one of claims 19 to 23, wherein the processing unit is further configured to:
perform the minimization of drive-tests measurement based on first configuration information, wherein the first configuration information is configured by the second access network device, and the first configuration information is used by the terminal device to perform minimization of drive-tests measurement when the terminal device is in a connected state; and
the communication unit is further configured to send a measurement result of the minimization of drive-tests measurement to the second access network device.

25. The apparatus according to any one of claims 19 to 24, wherein the processing unit is further configured to:
perform the application layer measurement based on second configuration information, wherein the second configuration information is configured by the first access network device before the terminal device accesses the second access network device, and the second configuration information is used by the terminal device to perform the application layer measurement; and
the communication unit is further configured to send a measurement result of the application layer measurement to the second access network device.

26. A communication apparatus, comprising:
a processing unit, configured to receive second indication information from a terminal device through a communication unit, wherein the second indication information is used to request to associate minimization of drive-tests measurement and application layer measurement, wherein
the communication unit is configured to send first configuration information to the terminal device based on the second indication information, wherein the first configuration information is used by the terminal device to perform minimization of drive-tests measurement when the terminal device is in a connected state.

27. The apparatus according to claim 26, wherein the communication unit is further configured to:
receive fourth indication information from the terminal device, wherein the fourth indication information indicates that minimization of drive-tests measurement performed by the terminal device when the terminal device is in a non-connected state is signaling-based minimization of drive-tests measurement or management-based minimization of drive-tests measurement; or the fourth indication information indicates that the terminal device has configuration information of signaling-based logged minimization of drive-tests measurement or has configuration information of management-based logged minimization of drive-tests measurement.

28. The apparatus according to claim 26 or 27, wherein the communication unit is further configured to:
receive fifth indication information from the terminal device, wherein the fifth indication information indicates that the terminal device has configuration information of the application layer measurement.

29. The apparatus according to claim 28, wherein if it is determined, based on the fourth indication information, that the minimization of drive-tests measurement performed by the terminal device when the terminal device is in a non-connected state is the signaling-based logged minimization of drive-tests measurement, the communication unit is further configured to:
send sixth indication information to a core network device, wherein the sixth indication information is used to request to configure, for the terminal device, configuration information of the minimization of drive-tests measurement performed by the terminal device when the terminal device is in a connected state, or indicates the terminal device to perform the application layer measurement on a broadcast service; and
receive the first configuration information from the core network device.

30. The apparatus according to any one of claims 26 to 29, wherein the communication unit is further configured to:
receive a measurement result of the minimization of drive-tests measurement and a measurement result of the application layer measurement from the terminal device.

31. The apparatus according to claim 30, wherein the communication unit is further configured to:
send the measurement result of the application layer measurement to a measurement collection entity, and send the measurement result of the minimization of drive-tests measurement to a trace collection entity.

32. A communication apparatus, comprising:
a communication unit, configured to receive first information and second information from a first access network device, wherein the first information comprises configuration information of minimization of drive-tests measurement performed by a terminal device when the terminal device is in a non-connected state, and the second information comprises configuration information of application layer measurement performed by the terminal device; and
a processing unit, configured to switch from the non-connected state to a connected state; and perform radio side measurement based on the first information, and perform the application layer measurement based on the second information.

33. The apparatus according to claim 32, wherein the communication unit is further configured to:
receive first indication information from the first access network device, wherein the first indication information indicates that the minimization of drive-tests measurement and the application layer measurement are to be associated.

34. The apparatus according to claim 32 or 33, wherein the processing unit is configured to:
switch to the connected state by establishing a connection to a second access network device.

35. The apparatus according to claim 34, wherein the communication unit is further configured to:
send a first measurement result and a second measurement result to the second access network device, wherein
the first measurement result is obtained by performing measurement by the terminal device based on the first information when the terminal device is in a non-connected state based on the first information, and the second measurement result is obtained by performing measurement by the terminal device based on the first information when the terminal device is in a non-connected state based on the second information.

36. The apparatus according to claim 34 or 35, wherein the communication unit is further configured to:
send a third measurement result and a fourth measurement result to the second access network device, wherein
the third measurement result is obtained by performing measurement by the terminal device based on the first information when the terminal device is in a connected state, and the fourth measurement result is obtained by performing measurement by the terminal device based on the second information when the terminal device is in a connected state.

37. A computer-readable storage medium, storing a computer program or instructions, wherein when the computer program or the instructions are run on a computer, the method according to any one of claims 1 to 18 is performed.

38. A computer program product, comprising instructions, wherein when the instructions are run on a computer, the method according to any one of claims 1 to 18 is performed.
